# EUROPEAN PATENT APPLICATION

(11) **EP 4 691 730 A1**
(43) Date of publication of application: **11.02.2026**
(21) Application number: 25193587.0
(22) Date of filing: 01.08.2025
(51) Int. Cl.: B29C 45/27

(54) **INJECTOR NOZZLE TIP FOR PLASTIC INJECTION MOLDING MACHINES**

(30) Priority: 07.08.2024 IT 202400018574
(71) Applicant: Inglass S.p.A., 31020 San Polo di Piave (Treviso) (IT)
(72) Inventor: Medakovic, Boris, 31020 San Polo di Piave (TV) (IT)
(74) Representative: Citron, Massimiliano

(57) **Abstract**

A structure applicable/applied to the end of an injector for injection molding of molten material is described. The structure comprises from the inside out: a nozzle tip formed of a first, second and third portions defining a channel inside the nozzle tip for molten material to be injected, a sleeve or overlay mounted on the external surface of the nozzle tip to enclose it in correspondence with the first portion, the third portion and partially the second portion, a cup-shaped terminal member and a ring nut.

## Description

The present invention relates to an injector nozzle tip for plastic injection molding machines, and more particularly relates to an injector nozzle tip structure.

Known nozzle tips consist of a single member of high thermal conductivity material, but they have poor abrasion resistance. Other designs consist of a single stainless steel member that is more resistant to abrasion but has limited thermal conductivity.

As a result, the known nozzle tips either have limited service life or require excessive energy to operate.

The main object of the invention is to overcome the aforementioned drawbacks, and more particularly to make a nozzle tip of the type defined above configured in such a way as to avoid both infiltrations of pressurized plastic matter between its components and corrosion effects by molding gases, while ensuring at the same time efficient thermal conductivity of the nozzle tip.

At least one object is achieved by a structure applicable/applied to the end of a molten material injection molding injector of molten material, the structure comprising from the inside out:
- a nozzle tip formed of a first, second and third portions defining a channel internal to the nozzle tip for molten material to be injected, wherein
   the first portion has a first cross-section,
   the second portion has a second cross-section smaller than the first cross-section and is provided at one free end thereof with an outlet for the molten material, and
   the third portion joins the first cross-section and the second cross-section, preferably thorough tapering;
- a sleeve or overlay mounted on the outer surface of the nozzle tip to enclose it at the first portion, the third portion, and partially at the second portion, wherein the second portion has an annular zone uncovered by the sleeve or overlay only near said end (i.e., at the part closest to the gate);
- a cup-shaped terminal member having
   a central axial hole bounded by first edges and
   an opening that is larger in diameter than the central hole and is bounded by second edges;
- a ring nut axially comprising, in order, the succession of
   a hollow cylindrical body threaded for attachment, e.g. screwing, to the rest of the injector,
   a flange, and
   a circular lip, e.g. radially narrower than the cylindrical body,

the cylindrical body, flange, and circular lip being mounted to completely enclose the sleeve or overlay at least at the first portion and partially at the third portion,
wherein
said terminal member extends between the circular lip and the annular zone so that
the first edges are in contact with and surround the annular zone, and
the second edges surround a terminal portion of the sleeve or overlay.

This structure allows using the above-mentioned ring nut, which facilitates cleaning in the gate zone compared with standard cylindrical ring nuts because the plastic cannot get into the stagnation areas between the nozzle tip and the mold plate on which it rests. Stagnation zones inside the ring nut are also eliminated. The result is easier maintenance and fewer hard-to-reach stagnation areas.

In one embodiment the sleeve or overlay is mounted in contact with the outer surface of the first portion, the third portion and partially the second portion.

In a different embodiment, the sleeve or overlay is mounted to remain separated from at least the outer surface of the third portion (there is an air gap between the sleeve or overlay and at least the outer surface of the third portion, with a very insulating quality).

In one embodiment, the inner walls of the cylindrical body, flange and circular lip are mounted to touch the outer surface of the sleeve by enclosing it completely in correspondence of at least the first portion. In a more preferred embodiment, only the inner walls of the cylindrical body are mounted to touch the outer surface of the sleeve. Instead, the inner walls of the flange and circular lip are mounted to remain internally separated from the sleeve by an air gap, with the advantage of preventing heat from going towards the mold plate.

Advantageously, the terminal member not only thermally insulates the second cross-section from the mold plate or insert in which the gate is made, but also acts to occupy a critical volume that usually remained empty and generated material stagnation.

The ring nut, sleeve, nozzle tip and terminal member after their assembly form a single body, easily mountable on the injector, which allows for precise couplings between the various components of the injection system (e.g. the concentricity between valve pin and ring nut, and valve pin-gate). The single body is interchangeable with other, less high-performance solutions without having to make adjustments on the mold.

The ring nut has excellent mechanical properties and wear resistance, while the sleeve or overlay, made of conductive material, has excellent thermal properties.

Therefore, the structure thus defined makes it possible to obtain a nozzle tip that combines qualities of mechanical wear resistance with improved heat transfer properties.

In a preferred embodiment, the terminal member comprises a ring to which the second edges internally belong, the ring being in contact with the circular lip along an external circular surface.

In one embodiment said opening has such an inner diameter so as to rest on the part of the outer surface of the sleeve which surrounds the second and/or third portions. In a more preferred embodiment, the opening has an inner diameter such that the inner surface of the terminal member (the one facing the central channel for the molten material) remains separated from the part of the outer surface of the sleeve which surrounds the second and/or third portion by means of an air gap.

In a preferred embodiment, which facilitates the coupling between the parts, the circular lip comprises an annular track or an annular undercut in which said ring is placed.

The first edges and the annular zone are fixed together, e.g. by a circular weld bead, brazing, or mechanical interference. This fixing allows the nozzle tip, sleeve or overlay, ring nut and terminal member to be packed together, forming a compact and cohesive assembly.

The sleeve or overlay is made of material with high thermal conductivity, e.g. copper, copper alloys, molybdenum alloys.

The nozzle tip is made of abrasion-resistant material, e.g. steel, preferably weldable steel.

The ring nut is made of material with low thermal conductivity and non-weldable, e.g. titanium and alloys.

Another aspect of the invention relates an aforementioned nozzle tip comprising or connected to an aforementioned structure in any of its embodiments defined herein.

The injector belongs to a hot runner used to inject molten material inside a mold cavity. The injector is mounted inside one or more plates that make up the mold and is attached, at one end thereof opposite the nozzle, to a distribution manifold of molten material.

The advantages of the invention will be even clearer from the following description of a preferred embodiment, in which
- Fig. 1 shows a cross-sectional view of a nozzle tip;

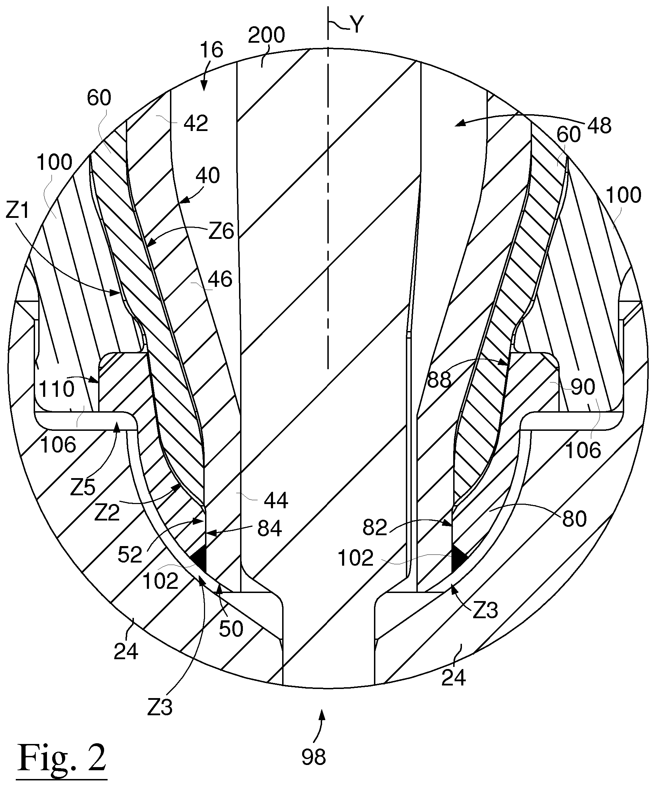

- Fig. 2 shows an enlargement of the dotted circle in Fig. 1.

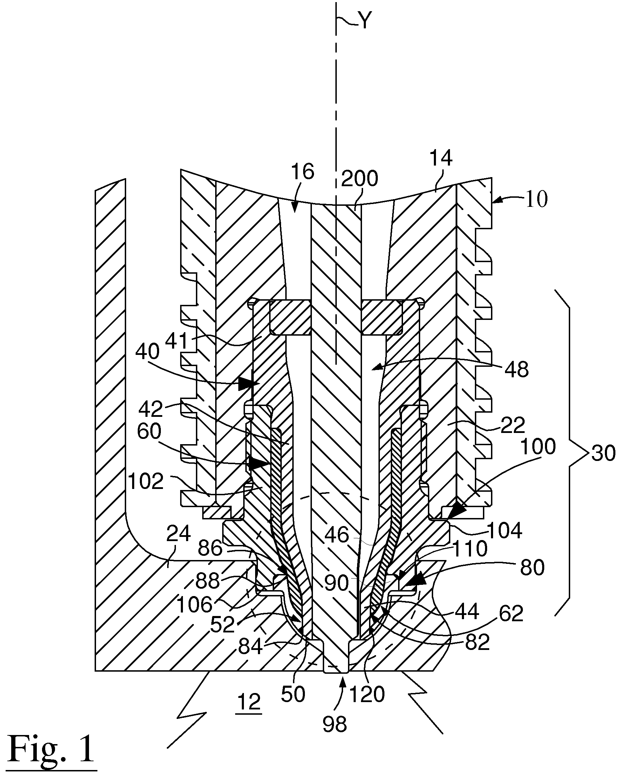

Referring to Fig. 1, there is shown a structure 30 of nozzle tip connected and connectable to a known injector 10 of a hot runner used to inject molten material into a mold cavity 12. The injector 10 (shown partially) is mounted in a known manner inside one or more plates (not shown) that make up the mold and is attached, at one end thereof not shown (opposite the nozzle), to a known manifold (not shown) for distribution of molten material.

The injector 10 has the following preferred structure.

It comprises an innermost hollow body 14 that defines an axial injection cavity 16 extending longitudinally along a central Y axis (which preferably is also of polar symmetry for the injector 10 and/or the structure 30). An end bushing 22 of the body 14 is configured (e.g. internally threaded) to couple with the structure 30, which is aligned with an insert or plate 24 provided with an orifice that creates a gate 98 toward the cavity 12. In a known manner in the cavity 16 there is a stem shutter 200 (valve pin) that is movable along the Y axis and by which the flow of molten material passing through the gate 98 can be adjusted/varied.

The structure 30 extends the cavity 16 up to the gate 98, so that the molten material can flow from the manifold through the cavity 16 to the gate 98, and then into the cavity 12, when the gate 98 is open (condition of stem 200 retracted from the gate 98).

The structure 30 comprises, from the inside out, a nozzle tip 40, a sleeve 60, a cup-shaped terminal member 80, and a ring nut 100.

Preferably the outer surface of the ring nut 100 is threaded to screw into the bushing 22.

The nozzle tip 40 in turn comprises the succession, going toward the gate 98, of
an end 41, e.g. bushing-shaped, that houses a centering member (for alignment/guidance of the shutter 200),
a first (e.g. cylindrical) portion 42,
a second (e.g. cylindrical) portion 44, and
a third portion 46 that joins the first portion 42 and the second portion 44.

The nozzle tip 40 is preferably mounted in abutment inside a corresponding recess of the bushing 22.

The end 41 and the portions 42, 44, and 46 together internally define an inner channel 48 that extends the cavity 16 to the gate 98. Specifically, the first portion 42 has a first passage cross-section for molten material, and the second portion 44 has a second passage cross-section smaller than the first cross-section.

The third portion 46 is preferably funnel-shaped and joins the cross-sections of the first portion 42 and the second portion 44 through tapering.

The second portion 44 is provided
at one free end thereof 50 with an outlet for molten material, and such outlet forms the gate 98; and
with an outer annular zone 52 in proximity of said free end 50.

The sleeve 60 is applied to surround the outer surface of the terminal member 40 so as to completely enclose at least the first portion 42 and the third portion 46, and only partially enclose the second portion 44 to leave the annular zone 52 uncovered.

The terminal member 80 has a central axial hole 82, bounded by first edges 84, and a ring 90 provided with an opening 86 that
is coaxial with the hole 82,
has a larger diameter than the central hole 82 and
is bounded by second perimetral edges 88.

The ring nut 100, going axially from the head of the injector 10 to the gate 98, in order comprises the succession of
- a cylindrical body 102 that is hollow and preferably threaded externally for screwing to the internal thread of the bushing 22,
- a flange 104 that protrudes externally from the cylindrical body 102 with respect to the Y axis, and
- a circular lip 106 that e.g. defines a circular seat for housing the second edges 88 and e.g. is radially narrower than the cylindrical body 102.

When the injector 10 is coupled to the structure 30 the free edge of the lip 106 can abut against the flange 104, or more preferably the edge of the lip 106 remains separated from the flange 104 to minimize heat loss toward the mold (see gap Z5).

In one embodiment, the inner walls of the cylindrical body 102, flange 104, and circular lip 106 are sized to touch the outer surface of the sleeve 60 completely enclosing it at least at the first portion 42. In a more preferred embodiment, only the inner walls of the cylindrical body 102 are mounted to touch the outer surface of the sleeve 60. Instead, the inner walls of the flange 104 and the circular lip 106 (see air gap indicated by arrow Z1) are mounted to remain internally separated from the sleeve 60 to prevent heat from going toward the mold plate.

The central axial hole 82 has a diameter equal to the outer diameter of the annular zone 52. The member 80 is applied over the annular zone 52 so that it extends between the circular lip 106 and the annular zone 52, specifically so that
the first edges 84 internally touch or cover the annular zone 52 and
the ring 90 is in contact with the circular lip 106.

In one embodiment, the opening 86 has such an inner diameter so as to rest on the part of the outer surface of the sleeve 60 which surrounds the second and/or third portions 44, 46. In a more preferred embodiment, the opening 86 has an inner diameter such that the inner surface of the terminal member 80 (the one facing the channel 48) remains separated from the part of the outer surface of the sleeve 60 that surrounds the second and/or third portions 44, 46 (see air gap indicated by arrow Z2). The advantage is to prevent heat from going toward the mold plate.

The structure 30 may rest directly on the insert 24, or more preferably remains suspended relative to the insert 24 and the gate 98, i.e. there is no contact between the member 80 and the insert 24 to avoid heat migration toward the mold (see air gap indicated by arrow Z3).

Preferably, to improve the attachment, the circular lip 106 comprises an annular track 110 in which the ring 90 is housed and preferably fixed.

Preferably the first edges 84 and the annular zone 52 are attached to each other by a circular weld bead 120 (other fixing means are possible too).

With this configuration, the terminal member 80 locks the sleeve 60 in place between the ring 100 and at least the portions 42, 46; and the components of the structure 30 remain locked together as one piece.

Preferably, the sleeve 60 is mounted so that a gap Z6 remains between the inner surface of the sleeve 60 and the outer surface of the second and/or third portions 44, 46 to prevent heat migration toward the mold.

The sleeve 60 implements or can be replaced by a generic covering overlay.

An advantage of the structure 30 is that it allows the use of a ring nut such as the ring nut 100, which facilitates cleaning in the area of the gate 98. The result is easier maintenance and fewer hard-to-reach stagnation areas near the gate 98.

Another advantage of the structure 30 is that, being composed of parts made of different materials, it has high thermal conductivity and high abrasion resistance. In addition, maintenance is easier because only one component needs to be replaced if it degrades.

The various gaps in the structure 30 thermally insulate the nozzle tip 10 more, and energy can be saved.

Finally, the mounting of the member 80 prevents infiltration of plastic matter and molding gas inside the nozzle tip.

## Claims

1. Structure applicable/applied to the end of an injector for injection molding of molten material, the structure comprising from the inside out:
• a nozzle tip formed of a first, second and third portions defining a channel inside the nozzle tip for molten material to be injected, wherein
the first portion has a first cross-section,
the second portion has a second cross-section smaller than the first cross-section and is provided at a free end thereof with an outlet for the molten material, and
the third portion joins the first cross-section and the second cross-section;
• a sleeve or overlay mounted on the external surface of the nozzle tip to enclose it in correspondence with the first portion, the third portion and partially the second portion,
wherein the second portion has an annular zone uncovered by the sleeve or overlay only in proximity of said end;
• a cup-shaped terminal member having
an axial central hole delimited by first edges and
an opening having a diameter greater than the central hole and delimited by second edges;
• a ring nut axially comprising, in order, the sequence of
a hollow cylindrical body threaded for attachment, e.g. by screwing, to the rest of the injector,
a flange, and
a circular lip,
the cylindrical body, the flange and the circular lip being mounted to completely enclose the sleeve or overlay at least at the first portion and partially at the third portion,
wherein said terminal member extends between the circular lip and the annular zone so that
the first edges are in contact with and surround the annular zone and
the second edges surround a terminal portion of the sleeve or overlay.

2. Structure according to claim 1, wherein the third portion joins the first cross-section and the second cross-section by a tapering.

3. Structure according to claim 1 or 2, wherein the sleeve or overlay is mounted in contact with the external surface of the first portion, the third portion and partially the second portion.

4. Structure according to claim 1 or 2, wherein the sleeve or overlay is mounted to remain separated from at least the external surface of the third portion.

5. Structure according to any preceding claim, wherein the internal walls of the cylindrical body, flange and circular lip are mounted to touch the external surface of the sleeve completely enclosing it at least at the first portion.

6. Structure according to any preceding claim 1 to 4, wherein only the internal walls of the cylindrical body are mounted to touch the external surface of the sleeve, the internal walls of the flange and circular lip being instead mounted to remain internally separated from the sleeve by an air gap.

7. Structure according to any preceding claim, wherein the terminal member comprises a ring to which the second edges internally belong, the ring being in contact with the circular lip along an external circular surface.

8. Structure according to claim 7, wherein the circular lip comprises an annular race or an annular undercut in which said ring is located.

9. Structure according to any preceding claim, wherein said opening has an internal diameter such that the opening rests on the part of the external surface of the sleeve that surrounds the second and/or third portion.

10. Structure according to any preceding claim from 1 to 8, wherein the opening has an internal diameter such that the internal surface of the terminal member remains separated from the part of the external surface of the sleeve that surrounds the second and/or third portion by means of an air gap.
